(19) Europäisches Patentamt

European Patent Office

Office européen des brevets

(11) Veröffentlichungsnummer: **0 240 069 B1**

(12) **EUROPÄISCHE PATENTSCHRIFT**

(45) Veröffentlichungstag der Patentschrift: **03.06.92**

(21) Anmeldenummer: **87200531.9**

(22) Anmeldetag: **23.03.87**

(51) Int. Cl.5: **H02K 7/118**, H02K 21/02

(54) **Vorrichtung zur Gleichlaufverbesserung der Umlaufbewegung des Rotors eines Einphasensynchronmotors.**

(30) Priorität: **29.03.86 DE 3610771**

(43) Veröffentlichungstag der Anmeldung:
**07.10.87 Patentblatt 87/41**

(45) Bekanntmachung des Hinweises auf die Patenterteilung:
**03.06.92 Patentblatt 92/23**

(84) Benannte Vertragsstaaten:
**AT DE FR GB**

(56) Entgegenhaltungen:
**DE-C- 3 513 395**
**FR-A- 2 266 975**
**GB-A- 1 548 645**
**US-A- 3 512 022**

**PATENT ABSTRACTS OF JAPAN, Band 7, Nr. 148 (E-184)[1293], 29. Juni 1983; & JP-A-58 58 846**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**FR GB AT**

(72) Erfinder: **Bertram, Leo**
**Am Sender**
**W-5190 Stolberg(DE)**
Erfinder: **Diefenbach, Gerhard**
**Schulstrasse 19**
**W-5100 Aachen(DE)**
Erfinder: **Schemmann, Hugo, Dr.**
**Zwartebergweg 6**
**NL-6371 XD Schaesberg(NL)**

(74) Vertreter: **Kupfermann, Fritz-Joachim, Dipl.-Ing.**
**Philips Patentverwaltung GmbH Wendenstrasse 35 Postfach 10 51 49**
**W-2000 Hamburg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

EP 0 240 069 B1

## Beschreibung

Die Erfindung bezieht sich auf eine Vorrichtung zur Gleichlaufverbesserung der Umlaufbewegung des Rotors eines in einem Gerätegehäuse angeordneten Einphasensynchronmotors mit Klebemoment, bei dem dem Mittelwert des Drehmomentes starke Wechselmomente überlagert sind und der eine vorzugsweise umlaufende Last antreibt, insbesondere bei kleinen Haushaltsgeräten.

Bei Geräten mit umlaufender Arbeitsbewegung, wozu beispielsweise Zitruspressen gehören (EP-OS l03 930 -PHD 82-l03 EP), eignen sich als Antrieb Einphasensynchronmotoren hinsichtlich ihrer Abmessungen, ihrer Wirtschaftlichkeit und des Wegfallens der Entstörungsmaßnahmen. Der Einsatz von Einphasensynchronmotoren erfolgt vorwiegend dort, wo die angetriebene Last unabhängig von der Antriebsdrehrichtung ihre Arbeitsfunktion ausübt. Dies ist auch der Fall bei Geräten mit oszillierender Arbeitsbewegung.

Bei den mittels Einphasensynchronmotoren angetriebenen kleinen Haushaltsgeräten ist mehr oder weniger bemerkbar, daß das Gleichlaufverhalten abhängig ist von der Drehrichtung des Motors. Dem Mittelwert des Drehmomentes sind nämlich starke Wechselmomente überlagert, die einen Gleichlauf verhindern. Man kann abhängig von den Startbedingungen eines Einphasensynchronmotors unterscheiden zwischen einer positiven und negativen Drehrichtung. Die positive Drehrichtung ist hierbei diejenige, bei nämlich starke Wechselmomente überlagert, die einen Gleichlauf verhindern. Man kann abhängig von den Startbedingungen eines Einphasensynchronmotors unterscheiden zwischen einer positiven und negativen Drehrichtung. Die positive Drehrichtung ist hierbei diejenige, bei der zuerst das vom Strom auf den Rotor ausgeübte Drehmoment gleich Null wird und danach, um einen kleinen (positiven) Winkel versetzt, das bei stromlosen Statorspulen vorhandene, magnetische Klebemoment ebenfalls gleich Null wird und dann in dieser Position zu einer stabilen Ruhelage des Rotors führt.

Bei den bisher realisierten Synchronmotorantrieben zeigte sich, daß bei dieser positiven Drehrichtung das Gleichlaufverhalten im allgemeinen wesentlich besser ist als bei der negativen Drehrichtung. Leider muß man feststellen, daß Einphasensynchronmotoren statistisch dazu neigen, bevorzugt in der negativen Drehrichtung anzulaufen.

Ein weiterer Nachteil von Einphasensynchronmotoren besteht in der Empfindlichkeit des Motors, gegenüber einer Reibungsbelastung anzulaufen. Ist das Reibungsmoment größer als das kritische Klebemoment, so kann der Rotor besonders in der Stellung, in der die Hauptfeldrichtung von Rotorfeld und Statorfeld parallel sind, stehenbleiben.

Das kritische Klebemoment ist das magnetische Moment, das auf den Rotor bei stromlosen Statorspulen wirkt, wenn man ihn aus seiner Ruhelage in die Position, in der die Richtungen von Rotorfeld und Statorfeld parallel sind, dreht.

Auch bei Trockenrasierapparaten mit rotierenden Messern kann die Reibungsbelastung infolge der Verschmutzung der Scherkappen sehr stark ansteigen, so daß der Anlauf gefährdet werden könnte. Es ist bekannt, dem Anlauf eines Einphasensynchronmotors eine zusätzliche Hilfe zur Verfügung zu stellen, die bei den vorliegenden Reibungswerten sicherstellt, daß die Hauptfeldrichtungen von Rotorfeld und Statorfeld im Ruhezustand nicht parallel sind und der Anlauf aus der durch diese Verstellung aus der Parallelstellung verursachten Rotorposition heraus erfolgen kann. Diese Verstellung aus der Parallelstellung heraus läßt sich mit einem Nockenrollensystem herbeiführen, bei dem eine federbelastete Rolle auf einen mit dem Rotor verbundenen, zur Mittellinie spiegelbildlichen Nocken drückt und diesen in eine Ruhestellung ungleich der Parallelstellung dreht (DE-OS 34 04 297 - PHD 84-022). Eine derartige Startmechanik ist auch beschrieben in ETZ, Band 30 (l978), Heft 2, Seiten 56 bis 60. Aus Bild 2b ergibt sich dort, daß bei einer Startunterstützung das Gesamt-Pulsationsmoment von Federmoment und Klebemoment größer ist als die Einzelwerte. Eine Reduzierung der Geschwindigkeitsschwankungen im Betrieb ist dabei nicht angesprochen; sie ist bei einem Gerät mit oszillierender Arbeitsbewegung auch zunächst uninteressant. Man kann sich jedoch Fälle vorstellen, in denen dies doch wichtig ist, z. B. wenn es auf die Zeitabhängigkeit der Schwingbewegung ankommt.

Ein Einphasensynchronmotor unterliegt auch während seines synchronen Laufes starken Schwankungen der Rotorwinkelgeschwindigkeit. Die Schwankungsamplitude kann bis zu etwa 40% des Synchronwertes betragen. Bei bestimmten Haushaltsgeräten, an die zwar im allgemeinen keine großen Anforderungen in bezug auf den Gleichlauf gestellt werden, kann dies jedoch zuviel sein. Wird beispielsweise bei Trockenrasiergeräten mit umlaufenden Messern eine bestimmte untere Drehzahl unterschritten, dann kann dies auf die Fangchancen für das Schneiden der Barthaare ungünstige Auswirkungen haben. Zum anderen ist es möglich, daß derartige Geschwindigkeitsschwankungen zu störenden Geräuschen Anlaß geben. Letzteres ist auch bei Rasiergeräten mit oszillierender Messerbewegung vorstellbar.

Es ist hierzu aus der DE-PS l4 88 267 bekannt, bei einem künstlich klebemomentfrei gemachten Einphasensynchronmotor einen drehbar auf der Welle gelagerten Zusatzmagneten mit einem diesem zugeordneten Eisenrückschluß zu verwenden, dessen künstliches Klebemoment die Schwankung des Strommomentes für einen vorgegebenen Betriebszustand und nur bei einem einzigen Drehsinn ausgleicht und so zu einem praktisch konstanten Moment führt.

Die Anordnung hat eine sehr aufwendige Läuferkonstruktion mit einem Rotor zur Folge, der aus mindestens zwei um 90° gegeneinander verdrehten Magnetelementen besteht, wobei der Nutzfluß um den Faktor 2 verkleinert ist. Hierdurch wird der Motor geschwächt. Des weiteren ist zur Erzeugung des phasenrichtigen Ausgleichsdrehmomentes ein nicht unbeträchtliches Magnetvolumen erforderlich, das von dem Motor in Rotation versetzt werden muß. Hierdurch wird das Anlaufverhalten des Motors wegen des stark vergrößerten Gesamt-Massenträgheitsmomentes im allgemeinen stark beeinträchtigt. Des weiteren wird die gesamte Konstruktion durch Hinzufügen des Ausgleichselementes, das eigentlich eine zweite, wenn auch unbewickelte Motorkonfiguration darstellt, voluminöser, aufwendiger und unwirtschaftlicher.

Drehgeschwindigkeitsschwankungen und hohe Startreibungsbelastungen haben den Einsatz von Einphasensynchronmotoren bei Trockenrasiergeräten mit umlaufenden Schneidmessern wegen der zuvor geschilderten Schwierigkeiten des Anlaufverhaltens, des Schneideffektes und der Geräuschentwicklung bisher verhindert.

Es ist Aufgabe der Erfindung, bei einer Vorrichtung der eingangs erwähnten Art, vorzugsweise mit umlaufender Arbeitsbewegung, auf einfache, raumsparende und wirtschaftliche Weise eine derartige Gleichlaufverbesserung des Einphasensynchronmotors herbeizuführen, daß die Motorwinkelgeschwindigkeitsschwankungen stark vermindert sind; auch soll das Startverhalten verbessert werden.

Die gestellte Aufgabe wird erfindungsgemäß durch die kennzeichnenden Merkendle des Anspruchs 1 gelöst.

Dieses mechanische Ausgleichsmoment kann gegenüber elektromechanischen Lösungsen beispielsweise in Form von Kurvenabtastgetrieben einfach, raumsparend und wirtschaftlich hergestellt werden.

Wenn ein Einphasensynchronmotor mit Klebemoment aufgrund des zusätzlichen mechanischen Ausgleichsdrehmomentes keine Winkelgeschwindigkeitsschwankungen mehr aufweist, dann ist das Verhalten hinsichtlich der Geschwindigkeitskonstanz und der Laufruhe dem eines Gleichstrommotors oder Asynchronmotors so weitgehend angepaßt, daß er für ein breiteres Einsatzgebiet verwendet werden kann.

Nach einer weiteren Ausgestaltung der Erfindung ist vorgesehen, daß das Ausgleichsdrehmoment bei einer wählbaren Drehrichtung den elektromechanischen Wechselmomenten des Motors entgegenwirkt und gleichzeitig die entgegengesetzte Drehrichtung gesperrt wird. Nach einer weiteren Ausgestaltung der Erfindung ist vorgesehen, daß auf den Rotor ein zusätzliches, außerhalb des Lastübertragungsweges vorgesehenes, mechanisches Ausgleichsdrehmoment einwirkt, das den elektromechanischen Wechselmomenten des Motors entgegenwirkt bei positiver Drehrichtung des Rotors, wobei die positive Drehrichtung diejenige ist, bei der zuerst das vom Strom auf den Rotor ausgeübte Drehmoment gleich Null wird und danach um einen kleinen Winkel versetzt das bei stromlosen Statorspulen vorhandene magnetische Klebemoment ebenfalls gleich Null wird und gleichzeitig in dieser Position der Rotor eine stabile Ruhelage einnimmt, und wobei die entgegengesetzte umgekehrte Drehrichtung gesperrt ist.

Wenn der Einphasensynchronmotor nur noch in seiner positiven Drehrichtung umlaufen kann und zusätzlich das mechanische Ausgleichsdrehmoment auf den Rotor einwirkt, dann ist sein Verhalten besonders günstig für Geräte, in denen eine gute Laufruhe und eine bestimmte Drehrichtung erforderlich sind. Dies ist beispielsweise bei Trockenrasierern mit einseitig angeschliffenen Schneidmessern der Fall.

Nach einer weiteren Ausgestaltung der Erfindung ist vorgesehen, daß das zusätzliche mechanische Drehmoment von einem Kurvenabtastgetriebe gebildet wird, das aus einem auf der Rotorwelle angebrachten Nocken und einem oder mehreren den Nocken abtastenden, drehbar gelagerten Abtastrad(rädern) besteht, welche(s) federnd gegen den Nocken gedrückt ist (sind). Ein solches Kurvenabtastgetriebe kann im Bereich des Lastübertragungsweges, z. B. im Bereich des Getriebes, mitlaufen und übt dabei seine ausgleichende Wirkung aus. Wird ein Abtastrad eingesetzt, dann wird dies mittels einer zusätzlichen Feder gegen den Nocken gedrückt. Werden zwei Abtasträder eingesetzt, dann ist die Feder zwar nicht erforderlich zur Aufrechterhaltung des Kontaktes; sie muß jedoch zur Erzeugung des zusätzlichen mechanischen Drehmomentes eingesetzt werden.

Nach einer weiteren Ausgestaltung der Erfindung ist vorgesehen, daß die Sperrung erzeugt wird mittels eines federnden Sperrelementes, das gegen eine Stirnfläche des Abtastrades bzw. eines der Abtasträder drückt, an dem eine Sperrnase vorgesehen ist, gegen die das Sperrelement bei der unerwünschten Drehrichtung anschlägt. Das Sperrelement kann dabei vorteilhafterweise ein Kunststoffspritzteil sein, das an dem gleichen Element gelagert ist wie das Abtastrad.

Nach einer weiteren Ausgestaltung der Erfindung ist vorgesehen, daß die Grundwellen des elektromagnetischen Motordrehmomentes und des mechanischen Ausgleichsdrehmomentes annähernd die gleiche Amplitude haben und bei einer vorgegebenen, vorzugsweise positiven Drehrichtung bei Nennbetrieb in Gegenphase liegen. Hierdurch heben sich die Grundwellen der Wechselmomente im Nennbetrieb gleichzeitig auf, was zu einer beträchtlichen Verbesserung der Laufruhe führt. Treten weitere zusätzliche pulsierende Lastmomente auf, wie dies bei oszillierender Arbeitsbewegung der Fall ist, so können diese in entsprechender Weise berücksichtigt werden.

Nach einer weiteren Ausgestaltung der Erfindung ist vorgesehen, daß die federnde Apressung des betreffenden Abtastrades an den Nocken mittels einer sich an einem Gegenlager abstützenden Andruckfeder erzeugt wird, deren Vorspannung und Federkonstante derart gewählt sind, daß die Amplituden der Grundwellen des elektromagnetischen Motordrehmomentes und des mechanischen Ausgleichsdrehmomentes annähernd gleich groß sind. Hierdurch wird erreicht, daß der Ausgleich der Wechselmomente in wirtschaftlicher und kompakter Form möglich wird.

Nach einer weiteren Ausgestaltung der Erfindung ist vorgesehen, daß der Winkel zwischen einer längeren Nockenachse und der Magnetisierungsrichtung des dauermagnetischen Läufers derart gewählt ist, daß bei Nennbetrieb des Gerätes die Grundwellen des elektromagnetischen Motordrehmomentes und des mechanischen Ausgleichsdrehmomentes bei annähernd gleicher Amplitude und bei einer vorgegebenen, vorzugsweise positiven Drehrichtung in Gegenphase liegen. Hierdurch kann in einfacher Weise durch Verdrehung des Nockens eine optimale Anpassung an die Belastung herbeigeführt werden. Auch pulsierende Lastmomente können hier berücksichtigt werden.

Die Erfindung wird anhand des in der Zeichnung dargestellten Ausführungsbeispieles näher erläutert. Es zeigen:

Fig. I schematisch den Antrieb einer Zitruspresse mit Hilfe eines Einphasensynchronmotors, der mit einer Vorrichtung zur Gleichlaufverbesserung versehen ist,

Fig. 2 eine Draufsicht auf den Einphasensynchronmotor und seine Vorrichtung zur Gleichlaufverbesserung, von der Seite II in Fig. I her gesehen,

Fig. 3 einen Kurvenabtaster, der mittels eines Abtastrades einen spiegelbildlichen Nocken auf der Welle des Einphasensynchronmotors abtastet,

Fig. 4 die Anordnung nach Fig. 3 im Schnitt längs der Linie III-III.

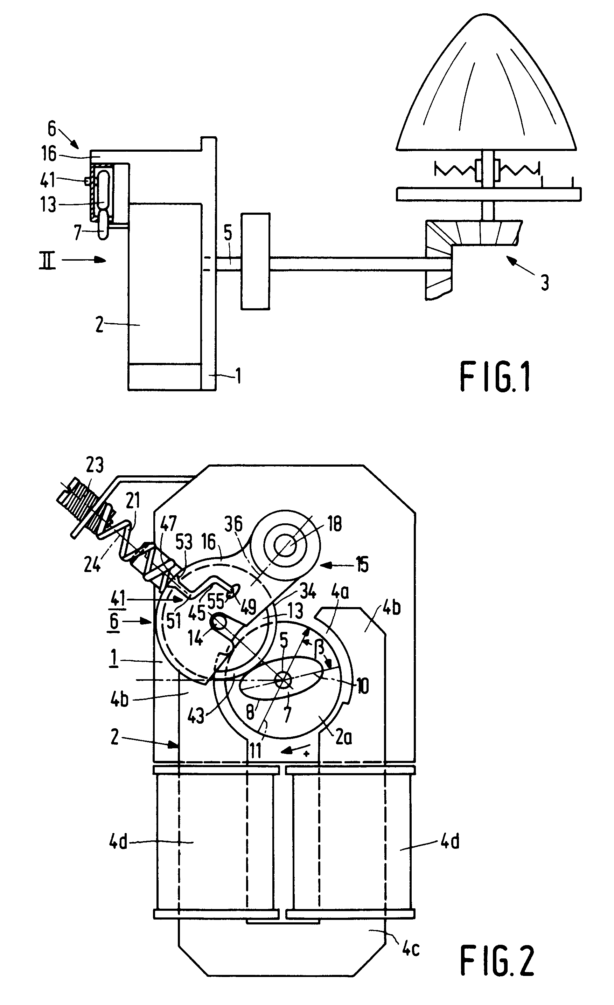

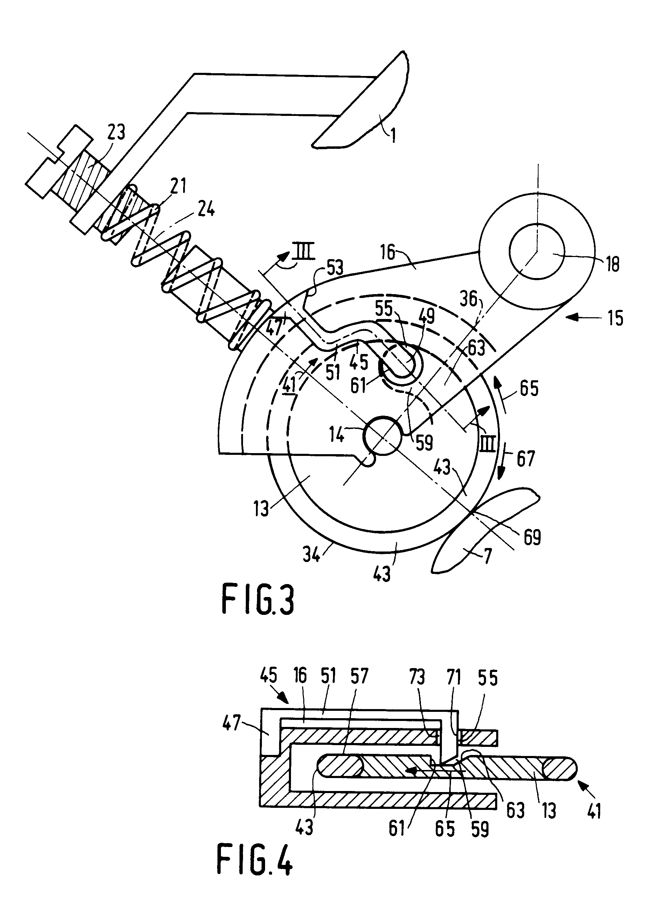

Fig. I zeigt einen an einer Montagewand I angeordneten Einphasensynchronmotor 2, der über seine Rotorwelle 5 eine dauernd angekoppelte Last 3 antreibt. Die Last 3 kann beispielsweise der Preßkegel einer Zitruspresse, das Schleifrad eines Messerschleifers oder der Untermessersatz eines Trokkenrasierapparates mit umlaufenden Schneidmessern sein. Auf die Welle 5 des Einphasensynchronmotors 2 arbeitet eine Vorrichtung 6 zur Gleichlaufverbesserung des Einphasensynchronmotors 2. Diese Vorrichtung 6 zur Gleichlaufverbesserung ist in den Fig. 2 bis 4 im einzelnen dargestellt.

Der Rotor 2a des Einphasensynchronmotors 2 dreht sich, wie Fig. 2 zeigt, in einem Luftspalt 4a zwischen Polschuhen 4b. Auf das U-förmig geformte Statoreisen 4c mit den Polschuhen 4b sind Erregerspulen 4d aufgeschoben. Die Antriebswelle 5 des Einphasensynchronmotors steht senkrecht aus dem Rotor 2a zu beiden Enden des Rotors 2a hervor und weist in Fig. 2 aus der Zeichenebene heraus. Das andere Ende der Antriebswelle 5 weist auf der Gegenseite des Einphasensynchronmotors bei dem Beispiel nach Fig. 2 in die Zeichenebene hinein und treibt die Last 3 an. Auf der Antriebswelle 5 ist ein zur Mittellinie I0 spiegelbildlicher Nocken 7 angeordnet. Die Kontur des Nockens ist mit 8 und seine längere Mittellinie mit I0 bezeichnet.

Gegen den Nocken 7 drückt ein Abtastrad I3, das in einem Rollenlager I4 eines Kurvenabtasters I5 gelagert ist. Der Kurvenabtaster I5 weist einen Hebelarm I6 auf, der um ein Schwenklager I8 verschwenkbar ist.

Bei einer nicht dargestellten Ausführungsform ist der Hebelarm vor dem Rollenlager in zwei Arme geteilt, und jeder Teilarm trägt ein Abtastrad. Der spiegelbildliche Nocken berührt ständig beide Abtasträder.

Gegen den Hebelarm I6 drückt in Fig. 2 eine Andruckfeder 2I, deren Vorspannung mit Hilfe einer Stellschraube 23 einstellbar ist. Die Mittellinie 24 der Andruckfeder 2I verläuft bei Mittenstellung des Abtasters I5 durch die Motorwelle 5 hindurch und steht senkrecht auf der Verbindungslinie 36 von Schwenklager I8 und Rollenlager I4.

Das Abtastrad I3 wird über einen elastischen Ring 43 mit seiner Oberfläche 34 gegen die Oberfläche 8 des Nockens 7 gedrückt. Die Andruckkraft ist dabei so bemessen, daß einerseits das Abtastrad I3 zu keiner Zeit von dem Nocken 7 abheben kann, daß andererseits die Andruckkraft aber nicht so groß wird, daß die Umlaufbewegung des Rotors 2a beeinträchtgt wird.

Das mittels der Andruckfeder 2I über das Abtastrad I3 auf den Nocken 7 und damit den Rotor 2a ausgeübte Moment wirkt als zusätzliches mechanisches Ausgleichsdrehmoment, das außerhalb des eigentlichen Lastübertragungsweges auf den Rotor 2a wirkt. Dieses mechanische Ausgleichsdrehmoment wirkt den elektromechanischen Wechselmomenten des Motors entgegen, z. B. bei positiver Drehrichtung des Rotors, wobei die positive Drehrichtung diejenige ist, bei der zuerst das vom Strom auf den Rotor ausgeübte Drehmoment gleich Null wird und danach um einen kleinen Winkel versetzt das bei stromlosen Statorspulen auftretende magnetische Klebemoment gleich Null wird und in dieser Position zu einer stabilen Ruhelage des Rotors führt. Die entgegengesetzte umgekehrte (negative) Drehrichtung wird dann, um das Drehen in der positiven Drehrichtung zu erzwingen, gesperrt. Unter dem magnetischen Klebemoment ist das Moment zu verstehen, welches der Rotormagnet bei stromlosen Statorspulen einer Verdrehung entgegensetzt. Bei stromlosen Statorspulen dreht sich der Rotor aufgrund der Magnetkraft des Rotormagneten in eine bestimmte Ruhestellung gegenüber den Statorpolen 4b.

Zur Erzwingung der im Beispiel positiven Drehrichtung des Rotors ist eine Rücklaufsperre 4l vorgesehen, die zwischen dem Hebelarm l6 des Kurvenabtasters l5 und dem Abtastrad l3, welches an seiner Oberfläche mit einem Reibring 43, beispielsweise aus Gummi, versehen ist, angeordnet ist. Die Rücklaufsperre 4l besteht aus einem Sperrelement 45, das aufgebaut ist aus einem Befestigungszapfen 47, einem Sperrhaken 49 und einer den Befestigungszapfen 47 und den Sperrhaken 49 verbindenden federnden Brücke 5l (Fig. 3 und 4). Der Befestigungszapfen 47 ist unverlierbar in ein Loch 53 des Hebelarmes l6 eingesetzt. Der Sperrhaken 49 greift freibeweglich durch ein weiteres Loch 55 in dem Hebelarm l6 hindurch. Die federnde Brücke 5l drückt den Sperrhaken 49 ständig gegen eine Stirnfläche 57 des Abtastrades l3.

Das Abtastrad l3 ist im Bereich seiner Stirnfläche 57 mit einer Vertiefung 59 versehen. Diese Vertiefung 59 weist in Umfangsrichtung zwei unterschiedlich ausgebildete Wände 6l und 63 auf. Die Wand 6l stellt für den Sperrhaken 49 eine Blockiernase dar und verläuft deshalb senkrecht zur Stirnfläche 57. Die andere Wand 63 stellt eine schräge Ebene dar, über die der Sperrhaken 49 hinweggleiten kann. In Abhängigkeit von der Drehrichtung des Motors wirkt nun diese Rücklaufsperre. Dreht der Rotor 2a über den Nocken 7 das Abtastrad l3 in Richtung eines Pfeiles 65, dann läuft der Sperrhaken 49 über die schräge Wand 63 ständig aus der Vertiefung 59 heraus. Dreht der Nocken 7 das Abtastrad hingegen in Richtung des Pfeiles 67, dann stößt der Sperrhaken 49 gegen die Sperrnase 6l, wodurch das Abtastrad l3 blockiert wird. Wenn die Reibung zwischen der Oberfläche 34 des Reibringes 43 auf dem Abtastrad l3 und dem Nocken 7 groß genug ist, dann hält das Abtastrad l3 den Rotor 2a an. Das bedeutet, daß der Einphasensynchronmotor seine Drehrichtung umkehrt. Die elastische Ausbildung des Reibringes, die nur eine Übertragungshilfe, jedoch kein Übertragungsglied für die Last darstellt, hat auch zur Folge, daß Sperrimpulsspitzen abgebaut werden und das System mechanisch entlastet wird. Die Verformung der Oberfläche des Reibringes 43 führt zu einer quasi formschlüssigen Sperrung. Die Sperrwirkung der Sperre 4l ist nun so gewählt, daß der Rotor 2a nur in der günstigen Drehrichtung, d. h. in der Drehrichtung anlaufen kann, in der der Motor einschließlich des mechanischen Ausgleichssystems ein besseres Gleichlaufverhalten hat. Die Geräuschentwicklung ist im übrigen in dieser Drehrichtung im allgemeinen angenehmer. Die Rückwand 7l des Sperrhakens 49 sollte sich an der Wand 73 des Loches 55 vorzugsweise elastisch abstützen können. Die Federkonstante und Masse des Sperrelementes 45 sollte im übrigen so angepaßt werden, daß beim Betrieb der Vorrichtung ein möglichst geringes Prellen erfolgt und der Sperrhaken im Lauf möglichst weich auf das Abtastrad l3 aufsetzt. Eine federnde Brücke 5l in Form eines Kunststoffteiles ist dabei besonders geeignet. Die Anpreßkraft der Federbrücke 5l sollte auch danach bemessen sein, daß eine Stabilisierung der Motorbewegung erfolgt und auf zusätzliche Dämpfungsmittel verzichtet werden kann. Die gewünschte Anpreßkraft läßt sich dadurch verwirklichen, daß das Anpreßglied elastisch ausgebildet ist und unter einer Vorspannung steht.

Es ist vorgesehen, daß die Grundwellen des elektromagnetischen Motordrehmomentes und des mechanischen Ausgleichsdrehmomentes annähernd die gleiche Amplitude haben und in der gewünschten, vorzugsweise positiven Drehrichtung in Gegenphase liegen. Erreicht ist dies, indem die federnde Wirkung mittels einer sich an einem Gegenlager abstützenden Andruckfeder 2l erzeugt wird, deren Vorspannung und Federkonstante derart gewählt sind, daß die Amplituden der Grundwellen des elektromagnetischen Motordrehmomentes und des mechanischen Ausgleichsdrehmomentes annähernd gleich groß sind. Maßgebend hierfür sind ferner die Nockenabmessungen. Die Stellung des Nockens 7 gegenüber der Magnetisierungsrichtung des Rotormagneten bestimmt die relative Phasenlage der Momente. Deshalb ist der Winkel zwischen einer längeren Nockenachse l0 und der Magnetisierungsrichtung ll des dauermagnetischen Läufers 2a derart gewählt, daß bei Nennbetrieb des Gerätes die Grundwellen des elektromagnetischen Motordrehmomentes und des mechanischen Ausgleichsdrehmomentes bei annähernd gleicher Amplitude bei der gewählten Drehrichtung in Gegenphase liegen. Amplitude und Phasenwinkel des gesamten elektromagnetischen Momentes lassen sich für den gewünschten Betriebszustand aus der Überlagerung von Stromwechselmoment und Klebemoment auf elementare Weise ermitteln. Hier können ebenfalls Pulsationen des Lastmomentes berücksichtigt werden.

Bei Verwendung einer derartigen Vorrichtung zur Gleichlaufverbesserung sind die Winkelgeschwindigkeitsschwankungen wesentlich kleiner als die natürlichen Schwankungen des reibungs- und trägheitsmomentbelasteten Motors und können kleiner als ein vorgegebener Maximalwert gemacht werden. Der zulässige Maximalwert ist dabei hauptsächlich von der Anwendung abhängig und kann wesentlich kleiner, z. B. in der Größenordnung von 5 bis l0% des Mittelwertes der synchronen Winkelgeschwindigkeit sein, wogegen bei dem Motor ohne Ausgleichsmaßnahmen Werte bis zu 40% des Mittelwertes auftreten können.

Die Reibungsbelastungen beim Starten, d. h. das Belastungsmoment, können bei Verwendung der Hilfsmechanik größer sein als das kritische Klebemoment. Das kritische Klebemoment ist das magnetische Moment, das auf den Rotor bei stromlosen Spulen wirkt, wenn man ihn aus seiner stabilen Ruhelage in die Position, in der die Richtungen von Statorfeld und Rotorfeld parallel sind, herausdreht. Vorzugsweise wird der Winkel so gewählt, daß beide Effekte, eine Verringerung der Geschwindigkeitsschwankungen im Nennbetrieb bei einer gewählten Drehrichung und eine Verbesserung des Anlaufverhaltens gegen Reibungswerte, erzielt werden. Im Hinblick auf die Anlaufunterstützung ist hierbei die positive Drehrichtung vorzuziehen, weil hier Klebemoment und mechanisches Hilfsmoment sich addieren können bei passender Wahl des Winkels .

Es zeigt sich, daß durch die lediglche Hinzufügung einer vorbeschriebenen Vorrichtung zur Gleichlaufverbesserung bei einer umlaufend angetriebenen Last die Winkelgeschwindigkeitsschwankungen in einer Drehrichtung stark reduziert sind. Bei der umgekehrten Drehrichtung hingegen würden sie sich, abgesehen vom Leerlauffall, stark vergrößern.

**Patentansprüche**

1. Vorrichtung zur Gleichlaufverbesserung der Umlaufbewegung des Rotors (2a) eines in einem Gerätegehäuse (l) angeordneten Einphasensynchronmotors (2) mit Klebemoment, bei dem dem Mittelwert des Drehmomentes starke Wechselmomente überlagert sind und der eine vorzugsweise umlaufende Last antreibt, insbesondere bei kleinen Haushaltsgeräten, dadurch gekennzeichnet, daß auf den Rotor (2a) ein zusätzliches, außerhalb des Lastübertragungsweges vorgesehenes, mechanisches Ausgleichsdrehmoment einwirkt, das den elektromechanischen Wechselmomenten des Motors (2) im Nennbetrieb und bei einer Drehrichtung entgegenwirkt, und daß das Klebemoment und das mechanische Ausgleichsdrehmoment unter Berücksichtigung ihrer Phasenlage den Rotor (2a) bei der vorliegenden Startreibung ausreichend weit aus der Parallelstellung von Statorfeld und Rotorfeld verdrehen, um einen Anlauf zu ermöglichen.

2. Vorrichtung nach Anspruch l, dadurch gekennzeichnet, daß das Ausgleichsdrehmoment abhängig von der Drehrichtung den elektromechanischen Wechselmomenten des Motors entgegenwirkt und gleichzeitig die entgegengesetzte Drehrichtung gesperrt wird.

3. Vorrichtung nach Anspruch 2, dadurch gekennzeichnet, daß auf den Rotor (2a) ein zusätzliches, außerhalb des Lastübertragungsweges vorgesehenes, mechanisches Ausgleichsdrehmoment einwirkt, das den elektromechanischen Wechselmomenten des Motors (2) entgegenwirkt bei positiver Drehrichtung des Rotors (2a), wobei die positive Drehrichtung diejenige ist, bei der zuerst das vom Strom auf den Rotor (2a) ausgeübte Drehmoment gleich Null wird und danach um einen kleinen Winkel versetzt das bei stromlosen Statorspulen (4d) vorhandene magnetische Klebemoment gleich Null wird und dann in dieser Position zu einer stabilen Ruhelage des Rotors führt, und wobei die entgegengesetzte umgekehrte Drehrichtung gesperrt ist.

4. Vorrichtung nach Anspruch l, 2 oder 3, dadurch gekennzeichnet, daß das zusätzliche mechanische Ausgleichsdrehmoment von einem Kurvenabtastgetriebe (l5) gebildet wird, das aus einem auf der Rotorwelle (5) angebrachten Nocken (7) und einem oder mehreren den Nocken (7) abtastenden, drehbar gelagerten Abtastrad(rädern) (l3) besteht, welche gegen den Nocken (7) gedrückt ist (sind).

5. Vorrichtung nach den Ansprüchen 2, 3 oder 4, dadurch gekennzeichnet, daß die Sperrung erzeugt wird mittels eines federnden Sperrelementes (45), das gegen eine Stirnfläche (57) des Abtastrades (l3) bzw. eines der Abtasträder drückt, an der eine Sperrnase (6l) vorgesehen ist, gegen die das Sperrelement (45) bei der unerwünschten Drehrichtung anschlägt.

6. Vorrichtung nach Anspruch 5, dadurch gekennzeichnet, daß das Sperrelement (45) ein Kunststoffspritzteil ist, das an dem gleichen Element gelagert ist wie das Abtastrad (l3).

7. Vorrichtung nach einem oder mehreren der Ansprüche l bis 6, dadurch gekennzeichnet, daß die Grundwellen des elektromagnetischen Motordrehmomentes und des mechanischen Ausgleichsdrehmomentes annähernd die gleiche Amplitude haben und bei einer vorgegebenen, vorzugsweise positiven Drehrichtung in Gegenphase liegen.

8. Vorrichtung nach den Ansprüchen 2 bis 7, dadurch gekennzeichnet, daß der Andruck und damit eine federnde Wirkung mittels einer sich an einem Gegenlager abstützenden Andruckfeder (2l) erzeugt wird, deren Vorspannung und Federkonstante derart gewählt sind, daß bei gegebenen Nockenabmessungen die Amplituden der Grundwellen des elektromagnetischen Motordrehmomentes und des mechanischen Ausgleichsdrehmomentes annähernd gleich groß sind.

9. Vorrichtung nach den Ansprüchen 2 bis 8, dadurch gekennzeichnet, daß der Winkel zwischen einer längeren Nockenachse (l0) und der Magnetisierungsrichtung (ll) des dauermagnetischen Läufers (2a) derart gewählt ist, daß bei Nennbetrieb des Gerätes die Grundwellen des elektromagnetischen Motordrehmomentes und des mechanischen Ausgleichsdrehmomentes bei annähernd gleicher Amplitude bei einer vorgegebenen, vorzugsweise positiven Drehrichtung in Gegenphase liegen.

10. Vorrichtung nach Anspruch 4, dadurch gekennzeichnet, daß die Oberfläche (34) des Abtastrades (l3) oder des Nockens (7) elastisch ausgebildet ist.

11. Vorrichtung nach Anspruch l0, dadurch gekennzeichnet, daß die Elastizität der Oberfläche (34) des Abtastrades (l3) oder des Nockens (7) mittels eines elastischen, auf die Oberfläche aufgebrachten Ringes (43) erfolgt.

12. Vorrichtung nach den vorhergehenden Ansprüchen, dadurch gekennzeichnet, daß pulsierende Lastmomente bei der Auslegung der Ausgleichsmechanik berücksichtigt sind.

**Claims**

1. A device for improving the stability of rotation of the rotor (2a) of a single-phase synchronous motor (2) arranged in an appliance housing (1) and having a detent torque, which motor exhibits an average torque on which strong alternating torques are superposed and which drives a preferably rotating load, in particular in small domestic appliances, characterised in that an additional mechanical compensation torque, provided outside the load-transmission path, acts upon the rotor (2a) and counteracts the electromechanical alternating torques of the motor (2) during nominal operation in one direction of rotation and, taking into account their phase relationship, the detent torque and the mechanical compensation torque rotate the rotor (2a) sufficiently far out of the parallel position of the stator field and the rotor field to enable starting with the prevailing starting friction.

2. A device as claimed in Claim 1, characterised in that the compensation torque counteracts the electromechanical alternating torques of the motor depending on the direction of rotation and at the same time the opposite direction of rotation is blocked.

3. A device as claimed in Claim 2, characterised in that an additional mechanical compensation torque, provided outside the load transmission path, acts upon the rotor (2a) and counteracts electromechanical alternating torques of the motor (2) in the positive direction of rotation of the rotor (2a), the positive direction of rotation being that direction in which the torque exerted on the rotor (2a) by the current becomes initially zero and in which subsequently, shifted through a small angle, the magnetic detent torque appearing when the stator coils (4d) are not energized also becomes zero and in this position gives rise to a stable rest position of the rotor, the opposite direction of rotation being blocked.

4. A device as claimed in Claim 1, 2 or 3, characterised in that the additional mechanical compensation torque is provided by a cam-and-follower mechanism (15) comprising a cam (7) arranged on the rotor shaft (5) and one or a plurality of rotatably journalled follower wheel(s) (13), which follow(s) the cam (7) and is (are) pressed against the cam (7).

5. A device as claimed in Claim 2, 3 or 4, characterised in that blocking is effected by means of a resilient blocking element (45) which bears against a radial surface (57) of the follower wheel (13) or one of the follower wheels, which surface has a blocking surface (61) against which the blocking element (45) abuts in the undesired direction of rotation.

6. A device as claimed in Claim 5, characterised in that the blocking element (45) is an injection-moulded plastics part arranged on the same element as the follower wheel (13).

7. A device as claimed in any one or several of the Claims 1 to 6, characterised in that the harmonics of the electromagnetic motor torque and the mechanical compensation torque have approximately equal amplitudes and are in phase opposition for a given, preferably positive, direction of rotation.

8. A device as claimed in Claims 2 to 7, characterised in that the pressure and hence a resilient action are provided by means of a compression spring (21) which bears against an abutment and whose initial pressure and spring constant are selected in such a way that for given cam dimensions the amplitudes of the harmonics of the electromagnetic motor torque and the mechanical compensation torque are approximately equal.

9. A device as claimed in Claims 2 to 8, characterised in that the angle between a major cam axis (10) and the direction of magnetisation (11) of the permanent-magnetic rotor (2a) is selected in such a way that during nominal operation of the appliance the harmonics of the electromagnetic motor torque and of the mechanical compensation torque are in phase opposition in the case of approximately equal amplitudes in a given, preferably positive direction of rotation.

10. A device as claimed in Claim 4, characterised in that the circumferential surface (34) of the follower wheel (13) or the cam (7) is elastic.

11. A device as claimed in Claim 10, characterised in that the elasticity of the circumferential surface (34) of the follower wheel (13) or the cam (7) is obtained by means of an elastic ring (43) mounted on said surface.

12. A device as claimed in the preceding Claims, characterised in that the compensation mechanism is constructed to allow for pulsating load torques.

**Revendications**

1. Dispositif pour améliorer la stabilité de rotation du rotor (2a) d'un moteur synchrone monophasé présentant un couple de retenue et disposé dans un boîtier d'appareil (1), moteur dans lequel des couples alternants forts sont superposés à la valeur moyenne du couple de rotation et qui entraîne une charge de préférence rotative, notamment dans de petits appareils électroménagers, caractérisé en ce que, sur le rotor (2a), agit un couple de rotation compensateur mécanique supplémentaire prévu en dehors du trajet de transmission de charge et qui, en fonctionnement nominal, contrecarre les couples alternants électromagnétiques du moteur (2) dans l'un des sens de rotation, et en ce que le couple de retenue et le couple de rotation compensateur mécanique, compte tenu de leur position de phase, amènent le rotor (2a), en présence du frottement de démarrage existant, à s'écarter suffisamment loin de la position parallèle du champ statorique et du champ rotorique pour permettre un démarrage.

2. Dispositif selon la revendication 1, caractérisé en ce que, selon le sens de rotation, le couple de rotation compensateur contrecarre les couples alternants électromécaniques du moteur et en ce qu'en même temps, le sens de rotation opposé est bloqué.

3. Dispositif selon la revendication 2, caractérisé en ce que le rotor (a) est soumis à l'action d'un couple de rotation compensateur mécanique supplémentaire prévu en dehors du trajet de transmission de charge et qui, dans le sens de rotation positif du rotor (2a), contrecarre les couples alternants électromécaniques du moteur (2), le sens de rotation positif étant celui dans lequel le couple de rotation exercé par le courant sur le rotor (2a) devient d'abord égal à zéro et, ensuite, décalé d'un petit angle, le couple de retenue magnétique, existant lorsque les bobines statoriques (4d) sont sans courant, devient également égal à zéro, tandis qu'en même temps, le rotor est amené dans une position de repos stable, et le sens de rotation opposé étant bloqué.

4. Dispositif selon la revendication 1, 2 ou 3, caractérisé en ce que le couple de rotation compensateur mécanique supplémentaire est formé par un mécanisme à came (15) constitué d'une came (7) disposée sur l'arbre (5) du rotor et d'un ou plusieurs galets à came (13) logés libres en rotation et qui suivent le pourtour de la came (7), galets qui sont pressés élastiquement contre la came (7).

5. Dispositif selon la revendication 2, 3 ou 4, caractérisé en ce que le blocage est engendré au moyen d'un élément de blocage élastique (45) pressant contre une surface radiale (57) du galet à came (134) ou de l'un des galets à came, surface radiale sur laquelle est prévu un talon de blocage (61) contre lequel bute l'élément de blocage (45) dans le sens de rotation non désiré.

6. Dispositif selon la revendication 5, caractérisé en ce que l'élément de blocage (45) est une pièce en matière plastique moulée par injection qui est appuyée sur les mêmes éléments que le galet (13).

7. Dispositif selon l'une ou plusieurs des revendications 1 à 6, caractérisé en ce que les harmoniques du couple de rotation électromagnétique du moteur et du couple de rotation compensateur mécanique ont à peu près la même amplitude et sont en opposition de phase dans un sens de rotation prédéterminé, de préférence le sens de rotation positif.

8. Dispositif selon les revendications 2 à 7, caractérisé en ce que la pression élastique exercée par le galet à came sur la came concernée est engendrée au moyen d'un ressort de pression appuyé (21) sur une butée et dont la précontrainte et la constante de rappel sont choisies de façon que les amplitudes des harmoniques du couple de rotation électromagnétique du moteur et du couple de rotation compensateur mécanique soient à peu près égales.

9. Dispositif selon les revendications 2 à 8, caractérisé en ce que l'angle formé par la ligne diamétrale la plus longue (10) de la came et la direction d'aimantation (11) du rotor à aimantation permanente (2a) est choisi de façon que, en fonctionnement nominal de l'appareil, les harmoniques du couple de rotation électromagnétique du moteur et du couple de rotation compensateur mécanique soient en opposition de phase à une amplitude à peu près égale et dans un sens de rotation prédéterminé, de préférence positif.

10. Dispositif selon la revendication 4, caractérisé en ce que la surface (34) du galet (13) ou de la came (7) est élastique.

11. Dispositif selon la revendication 10, caractérisé en ce que l'élasticité de la surface (34) du galet (13) ou de la came (7) est obtenue au moyen d'un anneau élastique (43) entourant la surface.

12. Dispositif selon les revendications précédentes, caractérisé en ce que la mécanique de compensation est conçu de façon à tenir compte de couples de charge pulsatoires.

**FIG.1**

**FIG.2**

FIG.3

FIG.4